# EUROPÄISCHE PATENTSCHRIFT

(11) **EP 2 960 559 B1**
(45) Veröffentlichungstag und Bekanntmachung des Hinweises auf die Patenterteilung: **05.06.2019**
(21) Anmeldenummer: 15163873.1
(22) Anmeldetag: 16.04.2015
(51) Int. Cl.: F16K 1/04, E05F 3/12

(54) **REGULIERVENTIL**
CONTROL VALVE
SOUPAPE DE RÉGLAGE

(30) Priorität: 24.06.2014 DE 102014212116
(43) Veröffentlichungstag der Anmeldung: 30.12.2015
(73) Patentinhaber: GEZE GmbH, 71229 Leonberg (DE)
(72) Erfinder: Wörner, Benjamin, 71229 Leonberg (DE)

(56) Entgegenhaltungen:
- EP-A2- 1 739 264
- WO-A1-2004/003412
- WO-A1-2009/001421
- DE-A1-102007 013 377
- DE-U1-202007 004 104
- DE-U1-202007 009 174

## Beschreibung

Die vorliegende Erfindung betrifft ein Regulierventil für einen Antrieb einer Tür oder eines Fensters mit einem insbesondere aus Kunststoff bestehenden Ventilkörper und einem Ventilglied, wobei der Ventilkörper einen Ventilkopf umfasst, der mit einer Werkzeugaufnahme für ein Betätigungswerkzeug versehen ist.

Antriebe für Türen oder Fenster sind allgemein bekannt und können als manuelle oder automatische Antriebe ausgeführt sein. In bekannter Weise umfasst ein derartiger Antrieb ein Gehäuse mit einer Bohrung, in der ein Arbeitskolben angeordnet ist, der mit einer Abtriebswelle getriebegemäßig zusammenwirkt. Auf der Abtriebswelle kann ein Gestänge oder ein Gleitarm drehfest angeordnet sein. Der Antrieb kann wahlweise an einem Flügel der Tür oder des Fensters oder an deren Umrahmung angeordnet sein. Entsprechend stützt sich das Gestänge oder der Gleitarm am Rahmen oder dem Flügel ab, wodurch eine Verbindung zwischen der Schwenkbewegung des Flügels und dem Antrieb bewirkt wird.

In dem mit einer Hydraulikflüssigkeit gefüllten Gehäuse ist zudem eine Feder angeordnet, die bei einer Drehbewegung der Abtriebswelle beim manuellen oder beispielsweise durch eine Hydraulikpumpe bewirkten automatischen Öffnen des Flügels durch Verschieben des Arbeitskolbens komprimiert wird und als Energiespeicher zum selbsttätigen Schließen des Flügels dient. Der Innenraum des Gehäuses ist durch den Kolben in mehrere Räume aufgeteilt. Zwischen diesen Räumen sind Hydraulikkanäle mit zugeordneten Regulierventilen zur Beeinflussung des Überströmens angeordnet, die der Steuerung des Antriebsverhaltens dienen.

Dabei sind die Regulierventile jeweils in einer mit einem Gewinde versehenen Bohrung im Gehäuse des Antriebs angeordnet und werden durch Drehen eingestellt, wodurch ein beispielsweise in Form eines Ventilkegels oder dergleichen vorgesehenes Ventilglied des Ventils relativ zu einem in dem Hydraulikkanal angeordneten Ventilsitz verlagert wird und so den Hydraulikkanal mehr oder weniger weit öffnet bzw. schließt.

Regulierventile der eingangs genannten Art werden zunehmend auch aus Kunststoff gefertigt, wobei Kunststoffregulierventile eine günstige Alternative zu Messing- oder Stahlventilen darstellen.

Bei den bisher üblichen Regulierventilen der eingangs genannten Art, die sowohl bei Obertürschließern als auch teilweise bei Bodentürschließern eingesetzt werden, ist die Werkzeugaufnahme des Ventilkopfes in Form eines sogenannten Phillips-Kreuzschlitzes mit sich zum Ventilglied hin verjüngenden Flanken ausgeführt. Aufgrund der keilförmigen Form tritt beim festen Anziehen einer Phillips-Schraube mittels eines entsprechenden Schraubendrehers eine Axialkraft auf, die die Spitze des Schraubendrehers aus dem Schraubenkopf heraustreibt. Durch dieses Heraustreiben kann nun aber insbesondere ein Kunststoffkreuzschlitz stark beschädigt werden, was das betreffende Regulierventil unbrauchbar macht. Auch der Gebrauch eines falschen Schraubendrehers bringt die Gefahr einer Beschädigung mit sich. Zudem kann ein Kreuzschlitz insbesondere bei Bodentürschließern stark verschmutzen. Ein weiteres Problem bei Regulierventilen der eingangs genannten Art besteht darin, dass sich die Ventile im Betrieb teilweise verdrehen. Um dies zu verhindern, werden häufig zusätzliche Brems- und Dichtringe montiert, was aber äußerst kostenintensiv ist.

In der DE 20 2007 004 104 U1 ist ein Regulierventil beschrieben, welches einen Schlitz im Ventilkopf zur Aufnahme eines Betätigungswerkzeugs aufweist. Hier ist die elastische Verdrehsicherung am Gewinde in einer das Gewinde durchbrechenden Nut gehalten.

Aus der DE 10 2007 013 377 A1 ist ebenfalls eine erhabene Verdrehsicherung bekannt, welche in das Innengewinde einer Bohrung eingeschraubt wird.

Der Erfindung liegt die Aufgabe zugrunde, ein verbessertes Regulierventil der eingangs genannten Art anzugeben, bei dem die zuvor erwähnten Nachteile beseitigt sind. Dabei soll das Regulierventil insbesondere einfach und kostengünstig herstellbar sein, eine höhere Sicherheit gegen ein Verdrehen gewährleisten sowie bei reduzierter Gefahr einer Beschädigung einfacher handhabbar und einfacher zu reinigen sein.

Erfindungsgemäß wird diese Aufgabe gelöst durch ein Regulierventil mit den Merkmalen des Anspruchs 1. Bevorzugte Ausführungsformen des erfindungsgemäßen Regulierventils sind in den Unteransprüchen angegeben.

Das erfindungsgemäße Regulierventil zeichnet sich dadurch aus, dass die Werkzeugaufnahme des Ventilkopfes als quer durch den Ventilkopf verlaufender, länglicher Schlitz ausgeführt und der Ventilkopf mit an dessen Umfang angeordneten-Vorspannflanken versehen ist, die sich quer zur Längsrichtung des Schlitzes radial nach außen erstrecken. Dabei kann dieses Regulierventil insbesondere aus Kunststoff bestehen.

Durch die speziellen Vorspannflanken wird ein unbeabsichtigtes Verdrehen des Regulierventils zuverlässig verhindert. Dabei ergibt sich durch das Übermaß der Vorspannflanken gegenüber den Umfangsabmessungen des restlichen Ventilkopfes ein Reibmoment, indem sich der Ventilkopf bei Einbringen des Regulierventils in die betreffende Aufnahmebohrung des Antriebsgehäuses quer zur Längsrichtung des Schlitzes elastisch verformt. Die Größe des Reibmoments ist abhängig vom axialen Abstand der Vorspannflanken vom Boden des Schlitzes. Dabei ergibt sich mit einem kleineren Abstand ein höheres Reibmoment und mit einem größeren Abstand entsprechend ein kleineres Reibmoment. Mit dem länglichen Schlitz lassen sich hohe Kräfte übertragen. Zudem bietet ein solcher länglicher Schlitz eine höhere Sicherheit gegen eine Beschädigung. Die Gefahr einer Beeinträchtigung der Handhabbarkeit durch Schmutz ist deutlich reduziert. Schließlich kann das Regulierventil auch einfacher gesäubert werden.

Erfindungsgemäß ist der Ventilkopf mit zwei einander gegenüberliegenden sich quer zur Längsrichtung des Schlitzes radial nach außen erstreckenden Vorspannflanken versehen. Bevorzugt besitzen die Vorspannflanken jeweils einen kreisförmigen Rand. Damit liegen die Vorspannflanken in Umfangsrichtung betrachtet über einen relativ großen Bereich an der Wand der betreffenden Aufnahmebohrungen an, wodurch die Reibung entsprechend erhöht wird. Eine oder beide Vorspannflanken und/oder die Gegenfläche können eine für einen Reib- und/oder Formschluss geeignete, angepasste Oberfläche bzw. Form aufweisen.

Von Vorteil ist insbesondere auch, wenn die Vorspannflanken auf ihrer vom Ventilglied abgewandten Seite jeweils bündig mit der freien Stirnfläche des Ventilkopfes abschließen.

Die Vorspannflanken sind auf ihrer dem Ventilglied zugewandten Seite zweckmäßigerweise jeweils mit einer Auflaufschräge versehen. Damit ist unter anderem sichergestellt, dass das Einbringen des Regulierventils in die betreffende Aufnahmebohrung durch die Vorspannflanken nicht behindert wird.

Die Vorspannflanken können insbesondere an den Ventilkopf angeformt sein, was die Herstellung des Regulierventils insgesamt vereinfacht und die Herstellungskosten entsprechend gering hält.

Das Ventilglied besteht bevorzugt aus demselben Material wie der Ventilkörper, wobei in diesem Fall der Ventilkörper und das Ventilglied einstückig ausgeführt sein können.

Das Ventilglied kann beispielweise in Form eines Ventilkegels vorgesehen sein.

Der Ventilkörper ist bevorzugt mit einer an den Ventilkopf angrenzenden ringförmigen Nut versehen, in der ein Dichtring angeordnet ist. Durch diesen Dichtring wird das Regulierventil nach außen hin abgedichtet, so dass keine Hydraulikflüssigkeit austreten kann. Zudem ist durch diesen Dichtring sichergestellt, dass die Vorspannflanken im "trockenen" Bereich des Ventils angeordnet sind, so dass eine mögliche Reduzierung der Reibung zwischen den Vorspannflanken und der Wandung der betreffenden Aufnahmebohrung durch Hydraulikflüssigkeit ausgeschlossen ist und ein beständig hoher Reibwert erhalten wird.

Die Erfindung wird im Folgenden anhand eines Ausführungsbeispiels unter Bezugnahme auf die Zeichnung näher erläutert; in dieser zeigen:
- Fig. 1: eine schematische Darstellung einer beispielhaften Ausführungsform eines erfindungsgemäßen Regulierventils,
- Fig. 2: eine schematische Darstellung des Regulierventils gemäß Fig. 1 aus einem anderen Blickwinkel und
- Fig. 3: eine schematische Darstellung des in eine Bohrung eines Antriebsgehäuses eingebrachten Regulierventils gemäß Fig. 1.

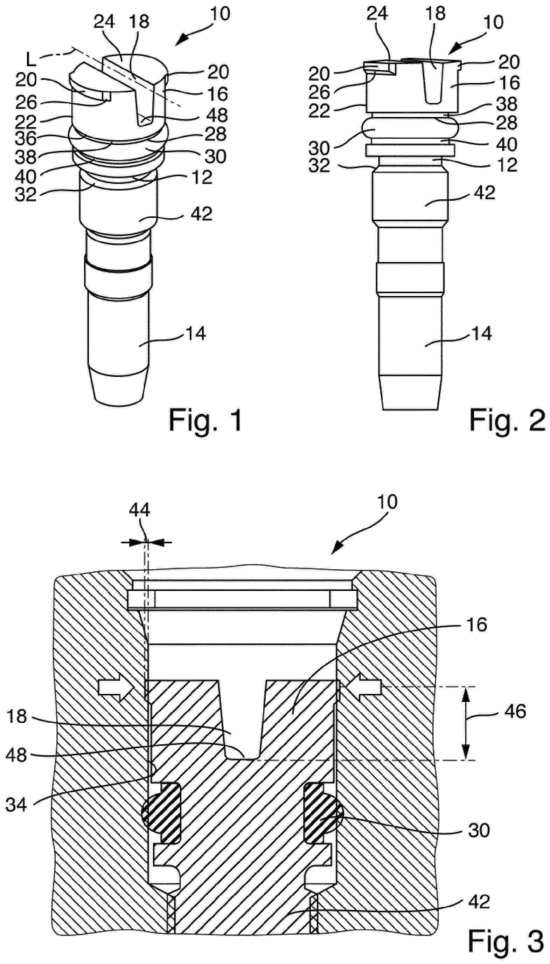

Fig. 1 zeigt in schematischer Darstellung eine beispielhafte Ausführungsform eines erfindungsgemäßen Regulierventils 10 für einen Antrieb, beispielsweise einer Tür oder eines Fensters mit einem insbesondere als Spritzgussteil aus Kunststoff hergestellten Ventilkörper 12 und einem Ventilglied 14, das insbesondere aus demselben Material wie der Ventilkörper 12 bestehen und einstückig mit diesem ausgeführt sein kann. Im vorliegenden Fall ist das Ventilglied 14 beispielsweise in Form eines Ventilkegels vorgesehen.

Der Ventilkörper 12 umfasst einen Ventilkopf 16, der mit einer Werkzeugaufnahme in Form eines quer durch den Ventilkopf verlaufenden, länglichen Schlitzes 18 für ein Betätigungswerkzeug wie insbesondere einen Schraubendreher oder dergleichen versehen ist. Der Ventilkopf 16 ist mit an dessen Umfang angeordneten Vorspannflanken 20 versehen, die sich quer zur Längsrichtung L des Schlitzes 18 radial nach außen erstrecken.

Dabei ist der Ventilkopf 16 im vorliegenden Fall beispielsweise mit zwei einander gegenüberliegenden sich quer zur Längsrichtung L des Schlitzes 18 radial nach außen erstreckenden Vorspannflanken 20 versehen, die jeweils einen kreisringförmigen Rand 22 besitzen.

Die Vorspannflanken 20 schließen auf ihrer vom Ventilglied 14 abgewandten Seite jeweils bündig mit der freien Stirnfläche 24 des Ventilkopfes 16 ab. Auf ihrer dem Ventilglied 14 zugewandten Seite sind die Vorspannflanken 20 jeweils mit einer Auflaufschräge 26 versehen.

Die Vorspannflanken 20 können an den Ventilkopf 16 des bevorzugt aus einem Spritzgussteil hergestellten Ventilkörper 12 angeformt sein. Wie bereits erwähnt, kann das Ventilglied 14 aus demselben Material wie der Ventilkörper 12, das heißt insbesondere aus Kunststoff, bestehen und mit diesem einstückig ausgeführt sein.

Angrenzend an den Ventilkopf 16 ist der Ventilkörper 12 mit einer Nut 28 versehen, in der ein Dichtring 30 angeordnet ist. Dabei kann dieser Dichtring 30 beispielsweise mittels eines Spritzgusswerkzeugs insbesondere so ausgeformt sein, dass er von der vom Ventilkopf 16 abgewandten Flanke 32 der Nut 28 beabstandet ist, so dass ausreichend Raum für ein elastisches Ausweichen des Dichtrings 30 bei dessen Verformung in der Aufnahmebohrung 34 (vgl. auch Fig. 3) des Antriebsgehäuses gegeben ist. Zur an den Ventilkopf 16 angrenzenden Flanke 36 der Nut 28 hin kann ein ringförmiger Materialansatz 38 am Dichtring 30 vorgesehen sein, durch den der gerundete, im montierten Zustand des Regulierventils 10 an der Wandung der Aufnahmebohrung 34 des Antriebsgehäuses anliegende, dichtende Bereich des Dichtrings 30 in einem Abstand zur Flanke 36 positioniert ist, wobei der Außendurchmesser des Materialansatzes 38 kleiner ist als der des Dichtrings 30, so dass auch in Richtung der Flanke 36 ausreichend Raum für eine elastische Verformung des Dichtrings 30 gegeben ist. Ein entsprechender ringförmiger Materialansatz 40 kann auch zur vom Ventilkopf 16 abgewandten Flanke 32 hin am Dichtring 30 vorgesehen sein.

Zur Aufnahme des Ventilkörpers 12 in einem Innengewinde der Aufnahmebohrung 34 des Antriebsgehäuses ist der Ventilkörper 12 zudem mit einem Gewinde 42 versehen, wodurch das Regulierventil 10 durch Eindrehen in das Antriebsgehäuse verstellbar aufgenommen werden kann. Zum Eindrehen und Verstellen des Regulierventils 10 kann beispielsweise ein Schraubendreher oder dergleichen in Eingriff mit dem eine Werkzeugaufnahme bildenden Schlitz 18 gebracht werden.

Fig. 2 zeigt das Regulierventil 10 gemäß Fig. 1 aus einem anderen Blickwinkel. Einander entsprechenden Teilen sind gleiche Bezugszeichen zugeordnet.

Fig. 3 zeigt das in eine Aufnahmebohrung 34 des Antriebsgehäuses eingebrachte Regulierventil 10 gemäß Fig. 1, wobei einander entsprechenden Teilen wieder gleiche Bezugszeichen zugeordnet sind.

Wie anhand dieser Fig. 3 zu erkennen ist, besitzen die Vorspannflanken 20 gegenüber dem Umfang des restlichen Ventilkopfes 16 ein geringes Übermaß 44, um das sie gegenüber dem restlichen Ventilkopf 16 radial vorstehen. Entsprechend wird der aus elastischem Material bestehende Ventilkopf 16 beim Einbringen des Regulierventils 10 in die Aufnahmebohrung 34 quer zur Längsrichtung L des Schlitzes 18 nach innen verformt. Aufgrund der Elastizität des Ventilkopfes 16 ergibt sich eine Rückstellkraft, durch die die Vorspannflanken 20 elastisch gegen die Innenwand der Aufnahmebohrung 34 gedrückt werden. Das sich hierbei ergebende Reibmoment ist vom axialen Abstand 46 zwischen den Vorspannflanken 20 und dem Boden 48 des Schlitzes 18 abhängig, wobei sich bei kleinerem Abstand ein höheres Reibmoment und bei größerem Abstand ein kleineres Reibmoment ergibt.

Eine oder beide Vorspannflanken 20 und/oder die Gegenfläche 34 können eine für einen Reib- und oder Formschluss geeignete, angepasste Oberfläche bzw. Form aufweisen.

### Bezugszeichenliste

- 10: Regulierventil
- 12: Ventilkörper
- 14: Ventilglied
- 16: Ventilkopf
- 18: Schlitz
- 20: Vorspannflanke
- 22: Rand
- 24: Stirnfläche
- 26: Auflaufschräge
- 28: Nut
- 30: Dichtring
- 32: Flanke
- 34: Aufnahmebohrung
- 36: Flanke
- 38: ringförmiger Materialansatz
- 40: ringförmiger Materialansatz
- 42: Gewinde
- 44: Übermaß
- 46: axialer Abstand
- 48: Boden

- L: Längsrichtung

## Patentansprüche

1. Regulierventil (10) für einen Antrieb einer Tür oder eines Fensters, mit einem insbesondere aus Kunststoff bestehenden Ventilkörper (12) und einem Ventilglied (14), wobei der Ventilkörper (12) einen Ventilkopf (16) umfasst, der mit einer Werkzeugaufnahme für ein Betätigungswerkzeug versehen ist,
**dadurch gekennzeichnet, dass** die Werkzeugaufnahme des aus elastischem Material bestehenden Ventilkopfes (16) als quer durch den Ventilkopf (16) verlaufender, länglicher Schlitz (18) ausgeführt ist, und der Ventilkopf (16) mit zwei an dessen Umfang angeordneten, einander gegenüberliegenden, sich quer zur Längsrichtung (L) des Schlitzes (18) radial nach außen erstreckenden Vorspannflanken (20) versehen ist.

2. Regulierventil nach Anspruch 1,
**dadurch gekennzeichnet, dass** die Vorspannflanken (20) jeweils einen kreisringförmigen Rand (22) besitzen.

3. Regulierventil nach zumindest einem der vorstehenden Ansprüche,
**dadurch gekennzeichnet, dass** die Vorspannflanken (20) auf ihrer vom Ventilglied (14) abgewandten Seite jeweils bündig mit der freien Stirnfläche (24) des Ventilkopfes (16) abschließen.

4. Regulierventil nach zumindest einem der vorstehenden Ansprüche,
**dadurch gekennzeichnet, dass** die Vorspannflanken (20) auf ihrer dem Ventilglied (14) zugewandten Seite jeweils mit einer Auflaufschräge (26) versehen sind.

5. Regulierventil nach zumindest einem der vorstehenden Ansprüche,
**dadurch gekennzeichnet, dass** die Vorspannflanken (20) an den Ventilkopf (16) angeformt sind.

6. Regulierventil nach zumindest einem der vorstehenden Ansprüche,
**dadurch gekennzeichnet, dass** das Ventilglied (14) aus demselben Material wie der Ventilkörper (12) besteht und der Ventilkörper (12) und das Ventilglied (14) einstückig ausgeführt sind.

7. Regulierventil nach zumindest einem der vorstehenden Ansprüche,
**dadurch gekennzeichnet, dass** das Ventilglied (14) in Form eines Ventilkegels vorgesehen ist.

8. Regulierventil nach zumindest einem der vorstehenden Ansprüche,
**dadurch gekennzeichnet, dass** der Ventilkörper (12) mit einer an den Ventilkopf (16) angrenzenden ringförmigen Nut (28) versehen ist, in der ein Dichtring (30) angeordnet ist.

9. Regulierventil nach zumindest einem der vorstehenden Ansprüche,
**dadurch gekennzeichnet , dass** mindestens eine der Vorspannflanken (20) eine für einen Reib- und/oder Formschluss mit der Gegenfläche einer Aufnahmebohrung (34) geeignete, angepasste Oberfläche bzw. Form aufweist.

## Claims

1. Regulating valve (10) for a drive of a door or of a window, having a valve body (12), consisting in particular of plastic, and a valve member (14), wherein the valve body (12) comprises a valve head (16) which is provided with a tool receptacle for an actuating tool,
**characterized in that** the tool receptacle of the valve head (16), which consists of elastic material, is configured as an elongate slot (18) which extends transversely through the valve head (16), and the valve head (16) is provided with two mutually opposite prestressing flanks (20) which are arranged on its circumference and which extend radially outwards transversely to the longitudinal direction (L) of the slot (18).

2. Regulating valve according to Claim 1,
**characterized in that** the prestressing flanks (20) each have a circular ring-shaped edge (22).

3. Regulating valve according to at least one of the preceding claims,
**characterized in that**, on their side facing away from the valve member (14), the prestressing flanks (20) each terminate flush with the free end face (24) of the valve head (16).

4. Regulating valve according to at least one of the preceding claims,
**characterized in that**, on their side facing the valve member (14), the prestressing flanks (20) are each provided with a run-on slope (26).

5. Regulating valve according to at least one of the preceding claims,
**characterized in that** the prestressing flanks (20) are integrally formed on the valve head (16).

6. Regulating valve according to at least one of the preceding claims,
**characterized in that** the valve member (14) consists of the same material as the valve body (12), and the valve body (12) and the valve member (14) are formed in one piece.

7. Regulating valve according to at least one of the preceding claims,
**characterized in that** the valve member (14) is provided in the form of a valve cone.

8. Regulating valve according to at least one of the preceding claims,
**characterized in that** the valve body (12) is provided with an annular groove (28) which adjoins the valve head (16) and in which a sealing ring (30) is arranged.

9. Regulating valve according to at least one of the preceding claims,
**characterized in that** at least one of the prestressing flanks (20) has an adapted surface or shape which is suitable for frictional and/or positive engagement with the counter-surface of a receiving bore (34).

## Revendications

1. Soupape de réglage (10) pour un entraînement d'une porte ou d'une fenêtre, avec un corps de soupape composé notamment de matière plastique (12) et un organe de soupape (14), dans laquelle le corps de soupape (12) comprend une tête de soupape (16), qui est munie d'un logement d'outil pour un outil d'actionnement, **caractérisée en ce que** le logement d'outil de la tête de soupape (16) composée de matière élastique est réalisé sous la forme d'une fente allongée (18) s'étendant transversalement à travers la tête de soupape (16), et la tête de soupape (16) est munie de deux flancs de précontrainte (20) disposés à sa périphérie, en opposition l'un à l'autre et s'étendant radialement vers l'extérieur transversalement à la direction longitudinale (L) de la fente (18).

2. Soupape de réglage selon la revendication 1, **caractérisée en ce que** les flancs de précontrainte (20) possèdent respectivement un bord en forme d'anneau circulaire (22).

3. Soupape de réglage selon au moins une des revendications précédentes, **caractérisée en ce que** les flancs de précontrainte (20) se raccordent, sur leur côté détourné de l'organe de soupape (14), en affleurement avec la face frontale libre (24) de la tête de soupape (16).

4. Soupape de réglage selon au moins une des revendications précédentes, **caractérisée en ce que** les flancs de précontrainte (20) sont respectivement munis d'une rampe d'entrée (26) sur leur côté tourné vers l'organe de soupape (14).

5. Soupape de réglage selon au moins une des revendications précédentes, **caractérisée en ce que** les flancs de précontrainte (20) sont formés sur la tête de soupape (16).

6. Soupape de réglage selon au moins une des revendications précédentes, **caractérisée en ce que** l'organe de soupape (14) se compose de la même matière que le corps de soupape (12) et le corps de soupape (12) et l'organe de soupape (14) sont réalisés en une seule pièce.

7. Soupape de réglage selon au moins une des revendications précédentes, **caractérisée en ce que** l'organe de soupape (14) est prévu sous la forme d'un cône de soupape.

8. Soupape de réglage selon au moins une des revendications précédentes, **caractérisée en ce que** le corps de soupape (12) est muni d'une rainure annulaire (28) adjacente à la tête de soupape (16), dans laquelle est disposé un anneau d'étanchéité (30).

9. Soupape de réglage selon au moins une des revendications précédentes, **caractérisée en ce qu'**au moins un des flancs de précontrainte (20) présente une surface ou une forme adaptée, appropriée pour un assemblage par friction et/ou par emboîtement avec la face opposée d'un alésage de réception (34).
